# EUROPÄISCHE PATENTANMELDUNG

(11) **EP 1 520 637 A1**
(43) Veröffentlichungstag der Anmeldung: **06.04.2005**
(21) Anmeldenummer: 04020596.5
(22) Anmeldetag: 31.08.2004
(51) Int. Cl.: B21D 26/02

(54) **Verfahren zur Herstellung eines Gabelstücks für ein Gelenkwellengelenk sowie ein nach diesem Verfahren hergestelltes Gabelstück**

(30) Priorität: 30.09.2003 DE 10345291
(71) Anmelder: Bayerische Motoren Werke Aktiengesellschaft, 80809 München (DE)
(72) Erfinder: Stüber, Horst, 85669 Pastetten (DE); Streinz, Wolfgang, 84034 Landshut (DE)

(57) **Zusammenfassung**

Verfahren zur Herstellung mindestens eines Gabelstücks eines Gelenkwellengelenks, wobei das Gabelstück zwei Gabelarme aufweist und durch folgende Bearbeitungsschritte aus einem Rohr hergestellt wird:
- Einbringen des Rohrs in einen Innenhochdruckumformwerkzeug,
- Aufbringen eines Innendrucks in dem Rohr (1),
- Aufweiten des Rohrs (1) in einem Bereich, in dem die Gabelarme entstehen sollen,
- Herstellen der Gabelarme durch Abtrennen von Rohrmaterial entlang von Außenkonturen der herzustellenden Gabelarme und Abtrennen von Rohrmaterial in einem Rohrbereich zwischen den herzustellenden Gabelarmen.

## Beschreibung

Die vorliegende Erfindung betrifft ein Verfahren zur Herstellung eines Gabelstücks für ein Gelenkwellengelenk gemäß den Merkmalen des Patentanspruches 1 sowie ein nach diesem Verfahren hergestelltes Gabelstück gemäß Patentanspruch 11.

Bei Fahrzeugen mit Hinterachstrieb ist der Getriebeausgang über eine Gelenkwelle mit dem Hinterachsgetriebe verbunden. Zwischen der Gelenkwelle und dem Getriebe sowie zwischen der Gelenkwelle und dem Hinterachsgetriebe ist üblicherweise jeweils ein Kardangelenk vorgesehen. Kardangelenke weisen zwei um 90° verdreht zueinander angeordnete Gabelstücke auf. Ein solches Gabelstück ist beispielsweise in der DE 101 06 158 A1 beschrieben.

Es werden sowohl geschmiedete Schweiß- und Montagegabelstücke aus Stahl oder Aluminium eingesetzt als auch Gabelstücke, die durch Biegetechniken aus Stahlblechen hergestellt sind. Geschmiedete Gabelstücke weisen häufig eine große Wandstärke und ungünstige Materialanhäufungen auf. Dies hat ein hohes Bauteilgewicht zur Folge und die Nachbearbeitung solcher Gabelstücke erfordert einen hohen Zerspanungsaufwand. Auch die bei Schmiedeteilen erforderliche Wärmebehandlung stellt einen beträchtlichen Aufwand dar. Als nachteilig ist ferner anzusehen, dass bei Schmiedeteilen Hinterschneidungen nicht darstellbar sind.

Hinterschneidungen sind aber aus Festigkeitsgründen gerade im Bereich der in den Armen eines Gabelstücks vorgesehenen Gabelbohrungen von Vorteil.

Aus Stahlblech gebogene Gabelstücke wiederum sind für die Übertragung großer Drehmomente nicht geeignet. Außerdem können mit herkömmlichen Biegetechniken komplexere Gabelstückkonturen nicht hergestellt werden.

Aufgabe der Erfindung ist es, ein effizientes Verfahren zur Herstellung von Gabelstücken sowie ein nach diesem Verfahren hergestelltes Gabelstück anzugeben, das hinsichtlich seiner mechanischen Eigenschaften optimiert ist.

Diese Aufgabe wird durch die Merkmale der Patentansprüche 1 bzw. 11 gelöst. Vorteilhafte Ausgestaltungen und Weiterbildungen der Erfindung sind den Unteransprüchen zu entnehmen.

Das Grundprinzip der Erfindung besteht darin, ein Gabelstück durch Innenhochdruckumformung aus einem Rohr herzustellen. In einem ersten Herstellschritt wird das Rohr in einen Innenhochdruckumformwerkzeug eingelegt. Anschließend wird auf das Rohr ein Innendruck aufgebracht, wodurch das Rohr zumindest in einem Bereich, in dem später Gabelarme des Gabelstücks entstehen sollen, aufgeweitet wird. Nach dem Aufweiten des Rohrs werden die Gabelarme hergestellt. Das Herstellen der Gabelarme erfolgt durch "Abtrennen" von Rohrmaterial entlang von Außenkonturen der herzustellenden Gabelarme sowie durch Abtrennen von Rohrmaterial in einem Bereich, der zwischen den beiden herzustellenden Gabelarmen liegt.

Ein wesentlicher Vorteil dieses Herstellverfahrens gegenüber den eingangs beschriebenen geschmiedeten Gabelarmen besteht darin, dass keine Wärmebehandlung erforderlich ist. Dennoch wird aufgrund der bei der Innenhochdruckumformung auftretenden Kaltverfestigung des Rohrmaterials eine hohe Steifigkeit erreicht. Ein weiterer Vorteil gegenüber Gabelstücken, die durch Schmieden hergestellt werden, besteht darin, dass bei durch Innenhochdruckumformung hergestellten Bauteilen Hinterschneidungen problemlos darstellbar sind. Durch Hinterschneidungen im Bereich der Gabelarme kann eine hohe Festigkeit bei geringem Gewicht erreicht werden.

Nach einer Weiterbildung der Erfindung können gleichzeitig zwei Gabelstücke hergestellt werden. Nach dem Aufweiten des Rohrs kann das Rohr nämlich derart in zwei Teile getrennt werden, dass sich durch den Trennvorgang zwei Gabelstücke ergeben. Die beiden Gabelstücke gehen um 90° gegeneinander verdreht aus dem aufgeweiteten Rohr hervor. Anschaulich ausgedrückt greifen vor dem Trennen der beiden Gabelstücke die Arme des einen Gabelstücks in einen Bereich, der zwischen den beiden Gabelarmen des anderen Gabelstücks liegt, und umgekehrt. Somit können aus einem aufgeweiteten Rohrstück zwei Gabelstücke herausgetrennt werden, wobei nur ein sehr geringer Bauteilverschnitt auftritt.

Das "Abtrennen" von Rohrmaterial von dem aufgeweiteten Rohr bzw. das Trennen der beiden Gabelstücke kann durch verschiedene an sich bekannte Trennverfahren erfolgen, beispielsweise durch Laserschneiden, durch eine spanende Bearbeitung, wie Fräsen, Sägen oder durch andere Trennverfahren.

Gelenkwellen- bzw. Kardangelenke bestehen aus zwei solchen Gabelstücken, die in bekannter Weise über Gelenkkreuze und Lager miteinander verbunden sind. Für die Montage der Gelenkkreuze und Lager muss im Bereich der freien Enden der Gabelarme jeweils ein Loch zur Aufnahme eines Gelenklagers hergestellt werden. Da in diese Löcher zur Aufnahme eines Gelenkkreuzes, müssen die beiden Löcher miteinander fluchten. Als Gelenklager können Nadellager verwendet werden.

Für die Herstellung der Löcher gibt es verschiedene Möglichkeiten. Die Löcher können während des Aufweitens des Rohrs, d.h. während der Innenhochdruckumformung im Innenhochdruckumformwerkzeug gestanzt werden. Alternativ dazu können die Löcher auch erst nach dem Aufweiten des Rohrs in einem separaten Arbeitsgang gestanzt, gebohrt, ausgespindelt, gefräst oder in sonstiger Weise hergestellt werden.

Nach einer Weiterbildung der Erfindung ist vorgesehen, dass das Gabelstück nach seiner Herstellung an dem Rohr verbleibt. Das Rohr kann dann als Gelenkwelle eingesetzt werden. In diesem Fall ist das Gabelstück integraler Bestandteil der Gelenkwelle; es ist also einstückig mit der Gelenkwelle verbunden.

Alternativ dazu kann das Gabelstück selbstverständlich auch von dem Rohr abgetrennt werden. Das abgetrennte Gabelstück kann dann durch an sich bekannte Verbindungsverfahren, wie z.B. Schweißen, Verschrauben, etc. mit einem Gelenkwellenrohr oder mit einem anderen Bauteil verbunden werden.

Für die Herstellung von Gabelstücken können Stahlrohre, Aluminiumrohre oder Rohre aus geeigneten Legierungen verwendet werden.

Im Folgenden wird die Erfindung im Zusammenhang mit der Zeichnung näher erläutert. Es zeigen:
- Figuren 1 - 5: einzelne Schritte bei der Herstellung eines Gabelstücks gemäß der Erfindung; und
- Figuren 6 - 8: einzelne Herstellschritte bei der Herstellung eines einstückig mit einer Gelenkwelle verbundenen Gabelstücks.

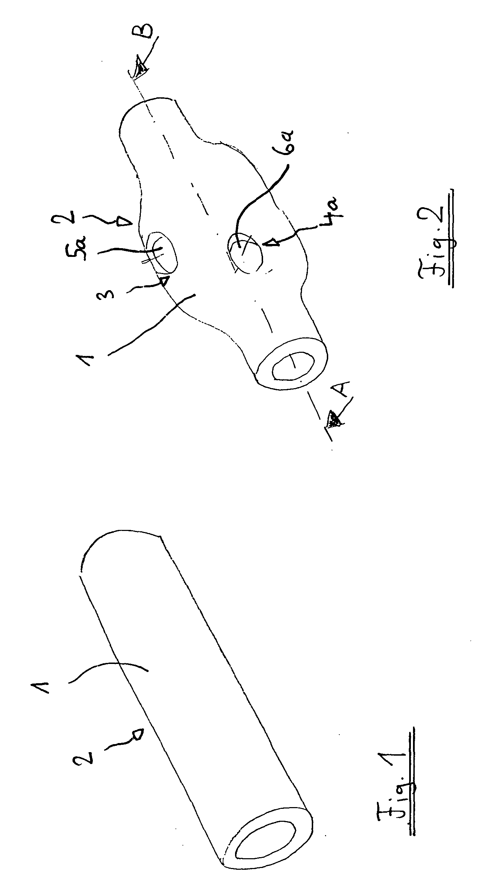

Figur 1 zeigt einen Rohrrohling 1, der in einem ersten Bearbeitungsschritt in ein Innenhochdruckumformwerkzeug (nicht dargestellt) eingelegt und in einem Bereich 2 aufgeweitet wird. In dem aufzuweitenden Bereich 2 entstehen in nachfolgenden Bearbeitungsschritten zwei Gabelstücke mit jeweils zwei Gabelarmen.

Figur 2 zeigt das Rohr 1 nach dem Aufweiten. Die Außenkontur des Rohrs 1 ist auch in dem aufgeweiteten Bereich 2 symmetrisch.

In Teilbereichen 3, 4 des aufgeweiteten Bereichs 2, entstehen in einem nachfolgenden Bearbeitungsschritt die Gabelarme der Gabelstücke. In dem in Fig. 2 dargestellten Bearbeitungsschritt wurden in den Teilbereichen 3, 4 jeweils bereits zwei Lochpaare hergestellt, in welche später beim Zusammenbau der beiden Gabelstücke zu einem Kardangelenk Nadellager eingesetzt werden. Die Löcher eines jeden der beiden Lochpaare fluchten miteinander. In der in Fig. 2 gezeigten Ansicht ist von den beiden Lochpaaren jeweils nur eines der Löcher zu sehen, die mit den Bezugszeichen 5a bzw. 6a versehen sind.

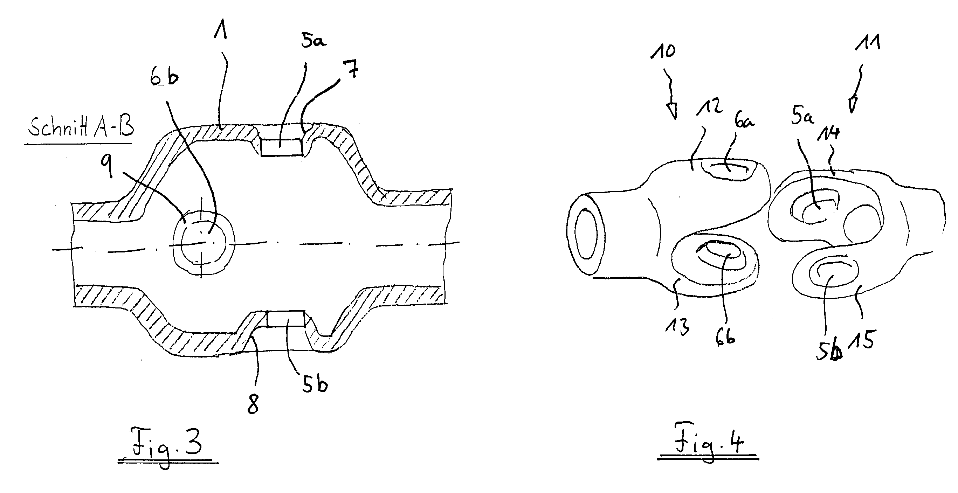

Figur 3 zeigt einen Schnitt durch das Rohr 1 der Figur 2 entlang der Schnittlinie A - B. Aus der Schnittdarstellung der Fig. 3 ist ersichtlich, dass das Rohr 1 bei der Innenhochdruckumformung im Bereich der Löcher 5 a, 5b "eingezogen" wird. Die bei dem "Einziehen" entstehenden Einbuchungen 7, 8 sind aus Festigkeitsgründen von Vorteil. Durch die Einbuchtungen im Bereich der Bohrungen 5a, 5b, in welche später die Gelenklager eingesetzt werden, ergibt sich nämlich ein hoher "Traganteil", d.h. eine hohe Festigkeit. Die Einbuchtungen 7, 8 ermöglichen eine Material- und somit eine Gewichtseinsparung. Eine entsprechende Einbuchtung 9 ist auch im Bereich des Lochs 6b zu erkennen.

Die Löcher 5a, 5b und 6a, 6b können beispielsweise beim Aufweiten des Rohrs, d.h. unmittelbar während der Innenhochdruckumformung im Innenhochdruckumformwerkzeug gestanzt werden. Alternativ dazu können die Löcher 5a, 5b, 6a, 6b auch in einem nachfolgenden Arbeitsgang hergestellt werden. Dies kann z.B. durch eine spanende Bearbeitung wie Bohren, Fräsen, Ausspindeln erfolgen oder durch Laserschneiden oder andere geeignete Bearbeitungsverfahren.

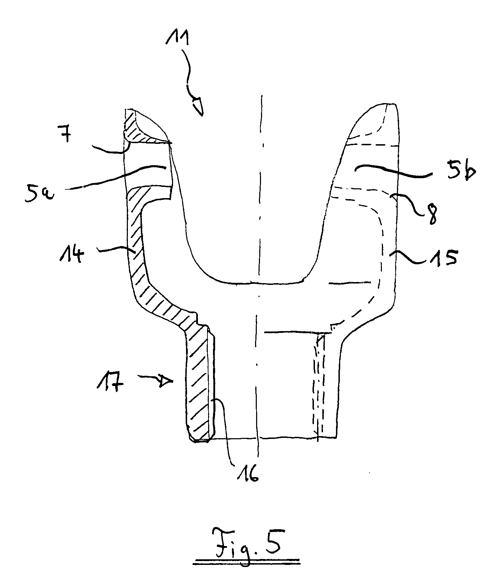

In einem weiteren Arbeitsschritt werden aus dem ausgeweiteten Rohr 1 zwei Gabelstücke 10, 11 ausgetrennt, was in Figur 4 dargestellt ist. Jedes der Gabelstücke 10, 11 weist jeweils zwei Gabelarme 12, 13 bzw. 14, 15 auf, in denen die Löcher 5a, 5b bzw. 6a, 6b vorgesehen sind. Wie aus den Figuren 2 - 4 ersichtlich ist, sind die Gabelstücke vor dem "Ausschneiden" aus dem Rohr - oder allgemeiner gesprochen, vor dem Trennvorgang - um 90° gegeneinander verdreht. Vor dem "Austrennen" der beiden Gabelstücke 10, 11 aus dem Rohr 1 greifen die Gabelarme 12, 13 des Gabelstücks 10 in einen Bereich ein, der zwischen den beiden Gabelarmen 14, 15 des Gabelstücks 11 liegt, und umgekehrt. Auf diese Weise können die beiden Gabelarme 10, 11 aus dem aufgeweiteten Rohr 1 nahezu verschnittfrei bzw. mit nur sehr geringem Verschnitt hergestellt werden.

Nun werden die Gabelarme aus dem aufgeweiteten Rohr 1 "ausgeschnitten". Der Begriff "Ausschneiden" ist äußerst breit zu verstehen. Hierunter fallen nicht nur Schneidverfahren an sich, wie z.B. Laserschneiden, sondern ganz allgemein Trennverfahren, wie z.B. Fräsen. Nach dem Austrennen der Gabelstücke 10, 11 aus dem aufgeweiteten Rohr 1 werden die Gabelstücke spanend nachbearbeitet. Hierbei werden beispielsweise die Außenkontur des Gabelstücks 11 entgratet und die Löcher 5a, 5b bzw. 6a, 6b nachbearbeitet. Bei dem in Fig. 5 gezeigten Ausführungsbeispiel wurde ferner in einem Rohrabschnitt 17 des Gabelstücks 11 ein Keilwellenprofil 16 hergestellt, was eine formschlüssige Drehkopplung des Gabelstücks 11 mit einer Welle oder einem anderen Bauteil, das eine entsprechende Außenverzahnung aufweist, ermöglicht.

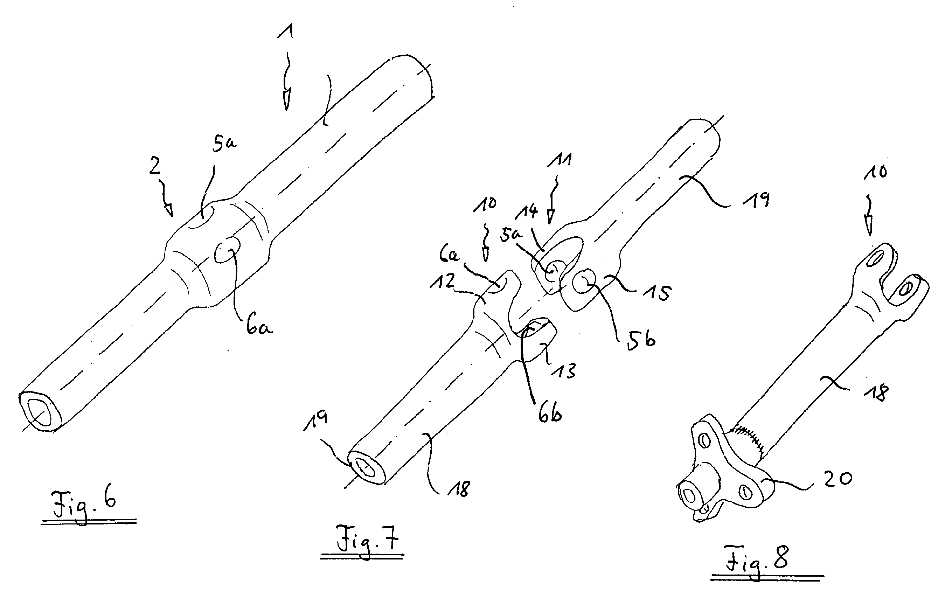

Die Figuren 6 - 8 zeigen die Herstellung von zwei Gabelstücken, die jeweils integral mit einer Gelenkwelle verbunden sind. Ein Ausgangsrohr 1 wird zunächst durch Innenhochdruckumformung in einem Bereich 2 aufgeweitet. Gleichzeitig mit dem Aufweiten oder in einem anschließenden separaten Arbeitsschritt werden die Löcher 5a, 5b bzw. 6a, 6b hergestellt.

Anschließend erfolgt ein "Formtrennen". Hierbei werden die beiden Gabelstücke 10, 11 z.B. durch Laserschneiden aus dem aufgeweiteten Bereich 2 des Rohrs 1 "herausgeschnitten". Die Gabelstücke 10, 11 werden hier nicht von den jeweiligen Rohrstücken abgetrennt, sondern verbleiben an Rohrstücken, welche als Gelenkwellen 18, 19 eingesetzt werden können. Die Gabelstücke 10, 11 sind also einstückig mit der jeweiligen Gelenkwelle 18, 19 verbunden.

An das dem Gabelstück 10 gegenüberliegenden Ende 19 der Gelenkwelle 18 kann dann beispielsweise ein Anbauteil 20 angeschweißt werden, was in Figur 8 dargestellt ist.

## Patentansprüche

1. Verfahren zur Herstellung mindestens eines Gabelstücks (10, 11) eines Gelenkwellengelenks, wobei das Gabelstück (10, 11) zwei Gabelarme (12, 13; 14, 15) aufweist und durch folgende Bearbeitungsschritte aus einem Rohr (1) hergestellt wird:
• Einbringen des Rohrs (1) in einen Innenhochdruckumformwerkzeug,
• Aufbringen eines Innendrucks in dem Rohr (1),
• Aufweiten des Rohrs (1) in einem Bereich (2), in dem die Gabelarme (12, 13; 14, 15) entstehen sollen,
• Herstellen der Gabelarme (12, 13; 14, 15) durch Abtrennen von Rohrmaterial entlang von Außenkonturen der herzustellenden Gabelarme (12, 13; 14, 15) und Abtrennen von Rohrmaterial in einem Rohrbereich zwischen den herzustellenden Gabelarmen (12, 13; 14, 15).

2. Verfahren nach Anspruch 1, wobei das Rohr (1) nach dem Aufweiten derart in zwei Teile getrennt wird, dass sich durch den Trennvorgang zwei Gabelstücke (10, 11) ergeben, die um 90° gegeneinander verdreht aus dem aufgeweiteten Rohr (1) hervorgehen, wobei vor dem Trennen der beiden Gabelstücke (10, 11) das eine Gabelstück (10) mit seinen beiden Gabelarmen (12, 13) in einen Bereich eingreift, der zwischen den beiden Gabelarmen (14, 15) des anderen Gabelstücks (11) liegt, und umgekehrt.

3. Verfahren nach Anspruch 1 oder 2, wobei das Abtrennen durch Laserschneiden erfolgt.

4. Verfahren nach Anspruch 1 oder 2, wobei das Abtrennen durch spanende Bearbeitung erfolgt.

5. Verfahren nach Anspruch 1 oder 2, wobei das Abtrennen durch eine Fräsbearbeitung erfolgt.

6. Verfahren nach einem der Ansprüche 1 bis 6, wobei in jedem der Gabelarme (12, 13; 14, 15) im Bereich des freien Endes des jeweiligen Gabelarms (12, 13; 14, 15) jeweils ein Loch (5a, 5b; 6a, 6b) zur Aufnahme eines Gelenklagers hergestellt wird, wobei die Löcher der beiden Gabelarme (12, 13; 14, 15) miteinander fluchten.

7. Verfahren nach Anspruch 6, wobei die Löcher (5a, 5b; 6a, 6b) beim Innenhochdruckaufweiten des Rohrs (1) gestanzt werden.

8. Verfahren nach Anspruch 6, wobei die Löcher (5a, 5b; 6a, 6b) nach dem Aufweiten des Rohrs (1) gebohrt werden.

9. Verfahren nach einem der Ansprüche 1 bis 8, wobei das Gabelstück (10, 11) nach seiner Herstellung an dem Rohr (1) verbleibt und eine Gelenkwelle (18, 19) bildet.

10. Verfahren nach einem der Ansprüche 1 bis 8, wobei das Gabelstück (10, 11) nach seiner Herstellung von dem Rohr (1) abgetrennt wird.

11. Gabelstück (10, 11), das nach einem der in den Patentansprüchen 1 bis 10 beschriebenen Verfahren hergestellt ist.
